Europäisches Patentamt

European Patent Office

Office européen des brevets

(19)

(11) Veröffentlichungsnummer: **0 094 468**
**A1**

# (12) EUROPÄISCHE PATENTANMELDUNG

(21) Anmeldenummer: **82710030.6**

(22) Anmeldetag: **14.05.82**

(51) Int. Cl.³: **F 16 D 3/40**

(43) Veröffentlichungstag der Anmeldung:
**23.11.83** Patentblatt **83/47**

(84) Benannte Vertragsstaaten:
**AT BE CH DE FR GB IT LI LU NL SE**

(71) Anmelder: **Messerschmitt-Bölkow-Blohm Gesellschaft mit beschränkter Haftung**
**Robert-Koch-Strasse**
**D-8012 Ottobrunn(DE)**

(72) Erfinder: **Prochaska, Wolfgang, Dipl.-Ing.**
**Klingerstrasse 16**
**D-8000 München 70(DE)**

(72) Erfinder: **Schulz, Ralf-Thilo, Dipl.-Ing.**
**Ödenstockacherstrasse 3**
**D-8011 Putzbrunn(DE)**

(54) Kardangelenkverbindung.

(57) Die Erfindung bezieht sich auf eine Kardangelenkverbindung zweier drehfest miteinander gekoppelter Teile aus Faserverbundmaterial. Um eine solche Kardangelenkverbindung zu vereinfachen, insbesondere die Verbindungsstellen zwischen Kardangelenk und den miteinander gekoppelten Teilen zu vereinfachen, wird gemäß der Erfindung vorgeschlagen, die miteinander über das Zapfenkreuz (6) gekoppelten Teile aus Faserverbundmaterial als ineinandergreifende Rohre (1, 2) bzw. Rohrendstücke auszubilden, in die unter Zwischenschaltung der Lager (7, 10) der Enden des Zapfenkreuzes (6) eingesetzt sind. Mit einer solchen Kardangelenkverbindung können Rohre gleichen und auch unterschiedlichen Durchmessers miteinander drehfest gekoppelt werden.

FIG. 1

EP 0 094 468 A1

Messerschmitt-Bölkow-Blohm
Gesellschaft
mit beschränkter Haftung
München

Ottobrunn, den 30.04.82
BT01 Hi/Cz - 9203 -

Kardangelenkverbindung

Die Erfindung bezieht sich auf eine Kardangelenkverbindung
zweier drehfest miteinander gekoppelter Teile aus Faserverbundmaterial gemäß dem Oberbegriff des Patentanspruches 1.

In vielen Bereichen der Technik werden Drehteile, wie
Achsen, Hohlwellen bzw. Rohre und dergleichen aus Faserverbundmaterial aufgebaut bzw. gewickelt; dies nicht nur
aus Gewichtsgründen, da derartige Teile gegenüber solchen
aus herkömmlichen leichter sind, sondern auch aus Festigkeitsgründen, da die Faserverbundmaterialien durch entsprechenden Aufbau den jeweiligen Belastungen des Drehteils
im Betrieb hervorragend angepaßt werden können.Schwierigkeiten mit derartigen hochwertigen Faserverbundteilen
treten dann auf, wenn diese Teile mit herkömmlichen
Materialien verbunden werden müssen. Da Teile aus Faserverbundmaterialien nicht geschweißt werden
können, muß hier nach anderen Möglichkeiten gesucht werden,
so z.B. Klebverbindungen oder speziellen Verbindungen ebenfalls aus Faserverbundmaterial. Sollen z.B. zwei drehfeste
Wellen mit einem Kardangelenk verbunden werden, so ist es
bisher üblich, ein gesondertes Kardangelenk mit einer
dauerhaften Verbindung, z.B. einer Klebverbindung zwischen die drehfest zu koppelnden Teile einzusetzen. Die Kardangelenke sind entweder aus Stahl oder für einfache Anwendungsfälle aus Kunststoff gefertigt, wie dieses in der DE-AS 20 32 778 beschrieben ist. Bei diesem Kardangelenk mit einem in Wälzlagern gelagerten Zapfenkreuz wird dieses mit den auf den Zapfen aufgenommenen Wälzlagern in eine Form eingelegt, und anschließend werden um die Wälzlager und das Zapfenkreuz herum Gelenkgabeln aus einem Kunststoff, z.B. Polytetrafluoräthylen, geformt. Dieses so hergestellte Kardangelenk kann dann zwischen die beiden drehfest zu koppelnden Teile aus Faserverbundmaterial eingeschaltet werden.

Eine Verbindung eines gesonderten Kardangelenks mit drehfest zu koppelnden Teilen aus Faserverbundmaterial bringt somit eine aufwendige Konstruktion hinsichtlich der Einzelteile und der Verbindung der Einzelteile untereinander mit sich.

Der Erfindung liegt die Aufgabe zugrunde, zwei drehfest über ein Kardangelenk zu koppelnde Teile aus Faserverbundmaterial mit Hilfe einer einfachen Kardangelenkverbindung zu koppeln, die einfach in der Konstruktion und in der Verbindung zwischen den Einzelteilen ist und ferner eine geringe Anzahl von solchen Einzelteilen benötigt.

Diese Aufgabe ist gemäß der Erfindung durch die im kennzeichnenden Teil des Patentanspruches 1 angegebenen Merkmale gelöst.

Gemäß diesen Merkmalen besteht der Erfindungsgedanke darin, ein übliches Zapfenkreuz direkt so in zwei ineinander ragende Rohre bzw. Rohrendstücke einzusetzen, so daß eine integrierte Kardangelenkverbindung zwischen den beiden ineinandergreifenden Rohren bzw. Rohrendabschnitten mit den üblichen zwei weiteren Freiheitsgraden entsteht. Die Rohre bzw. Rohrendabschnitte sind direkt die drehfest zu koppelnden Teile aus Verbundmaterial; sollen z.B. Vollwellen miteinander verbunden werden, so werden diese an ihren Enden direkt bei der Herstellung, z.B. der Wickelung mit einem Rohrendstück versehen, das für die Konstruktion des integrierten Kardangelenkes benutzt wird. Eine Kardangelenkverbindung gemäß der Erfindung weist eine sehr einfache Konstruktion auf und vermeidet Probleme hinsichtlich der Verbindung unterschiedlicher Materialien, wie dieses oben erwähnt ist. Eine erfindungsgemäße Kardangelenkverbindung ist insbesondere für kleine Winkeländerungen geeignet. Durch entsprechende konstruktive Auslegung z.B. des einen Rohrendstückes als in das andere Rohr eingreifende Gabel, können die möglichen Winkeländerungen auch vergrößert werden.

Weitere Ausgestaltungen und Vorteile der Erfindung gehen aus den Unteransprüchen in Verbindung mit der nachfolgenden Beschreibung hervor, in der die Erfindung in mehreren Ausführungsbeispielen anhand der Zeichnung näher erläutert ist. In der Zeichnung stellen dar:

Figur 1    einen Querschnitt durch eine Kardangelenkverbindung gemäß der Erfindung zur Verbindung zweier Rohre verschiedenen Durchmessers;

Figur 2    einen Schnitt längs II-II der Kardangelenkverbindung in Figur 1;

Figur 3    eine perspektivische Explosionsdarstellung der in den Figuren 1 und 2 dargestellten Kardangelenkverbindung;

Figur 4          einen Querschnitt durch eine weitere Kardangelenkverbindung gemäß der Erfindung zur Verbindung zweier Rohre gleichen Durchmessers;

Figur 5          einen Teilschnitt durch eine weitere Ausbildung einer Kardangelenkverbindung zur
                Verbindung zweier Rohre verschiedenen Durchmessers;

Figur 6          eine perspektivische, teilweise aufgebrochene
                Darstellung einer weiteren Kardangelenkverbindung gemäß der Erfindung zur Verbindung
                zweier Rohre mit relativ großen Winkeländerungen.

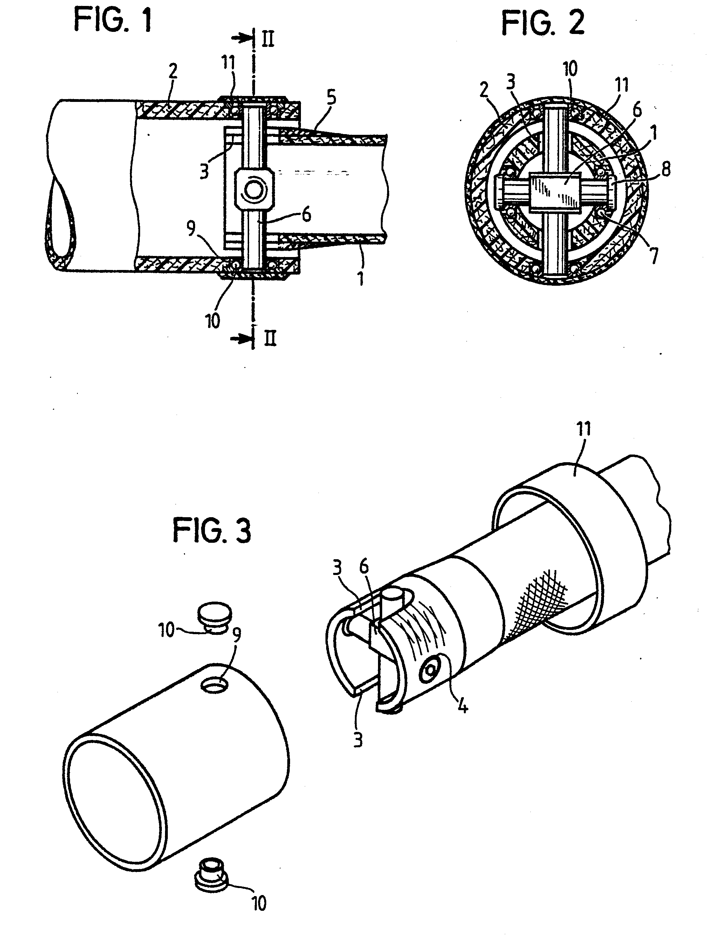

In den Figuren 1 bis 3 ist eine Kardangelenkverbindungen für
die drehfeste Koppelung zweier Rohre 1 und 2 aus gewickelten
Faserverbundmaterial bzw. Faserlaminat dargestellt. Das
Rohr 1 hat einen kleineren Durchmesser als das Rohr 2.
Das Endstück des Rohres 1 weist zwei axiale , einander
gegenüberliegende Längsschlitze 3 auf und im rechten Winkel
dazu zwei einander gegenüberliegende Kreisöffnungen 4.
Öffnungen und Schlitze wechseln sich längs des Umfanges
jeweils in 90°-Winkelabständen ab. Zur Verstärkung des
durchbrochenen Endes des Rohres 1 wird noch in diesem Bereich ein Verstärkungsring aus Laminat aufgebracht, der die
erwähnten Längsschlitze und Öffnungen jedoch weiterhin freiläßt.

In die beiden gegenüberliegenden Kreisöffnungen können zwei
gegenüberliegende Zapfen eines Zapfenkreuzes 6 aus Stahl
eingesetzt werden. Um die Zapfenenden werden in den Öffnungen 4
noch Lager, z.B. Wälzlager 7 angeordnet, die mit in die Zapfen eindringenden Befestigungsschrauben 8 in den Öffnungen verspannt sind. Die beiden anderen Zapfen des Zapfenkreuzes  6 ragen durch die beiden Schlitze; das Zapfenkreuz kann um die Achse der in die Öffnungen eingreifenden Zapfen geschwenkt werden.

Das Rohr 2 weist axial gegenüberliegend zwei radiale Öffnungen 9 auf. In diese Öffnungen können die beiden durch die Längsschlitze 3 des Rohres 1 hindurchragenden freien Zapfen des Zapfenkreuzes 6 eingesetzt werden, wobei zwischen die Zapfenenden und den Rand der Öffnungen 9 jeweils Lager, z.B. Wälzlager 10 zwischengeschaltet werden. Die Wälzlager, die auf einem Flansch der Öffnung abgestützt sind, werden durch einen Sicherungsring 11 aus Laminat gegen Herausfallen geschützt. Aus der gemäß Figur 1 zusammengesetzten Kardangelenkverbindung zweier Rohre geht hervor, daß diese drehfest miteinander verbunden sind, jedoch in gewissen Winkeländerungen in zwei Freiheitsgrade gegeneinander verschwenkbar sind. Die Größe dieser möglichen Winkeländerung hängt davon ab, wie weit die Eintauchtiefe des dünneren Rohres 1 in das größere Rohr ist und wie unterschiedliche die beiden Durchmesser sind.

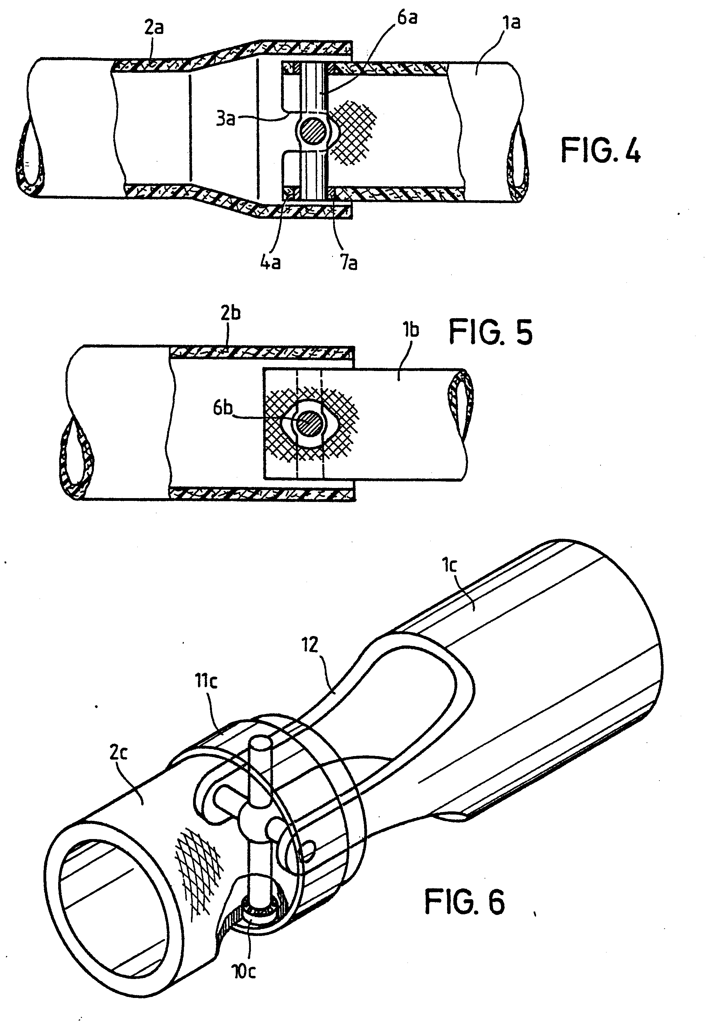

Um Rohre gleichen Durchmessers, wie in Figur 4 gezeigt, mit einer Kardangelenkverbindung zu koppeln, ist das eine Rohr 2a am Ende aufgeweitet, so daß es dort das gleich starke Rohr 1a umgibt. In diesem Rohr 1a wird wiederum in Längsschlitze 3a und Kreisöffnungen 4a das Zapfenkreuz 6a eingefügt, welches mit den beiden anderen , durch die Längsschlitze 3a ragenden freien Enden unter Zwischenschaltung von weiteren Wälzlagern mit dem aufgeweiteten Rohrendstück des Rohres 2a verbunden ist.

Die in Figur 5 gezeigte Kardangelenkverbindung ist die gleiche wie in Figur 4, jedoch sind die Rohre hier verschiedenen Durchmessers, so daß das dort gezeigte Rohr 2b das Rohr 1b wie das in Figur 4 dargestellte aufgeweitete Rohrendstück umgibt. Das Zapfenkreuz 6b ist auf gleiche Weise wie in Figur 4 zwischen die beiden Rohre gesetzt.

In Figur 6 sind zwei Rohre 1c und 2c gleichen Durchmessers mit einer integrierten Kardangelenkverbindung drehfest miteinander gekoppelt. Um gegenüber den oben beschriebenen Ausführungsformen mit jeweils zwei ineinandergreifenden Rohren bzw. Rohrendstücken die möglichen Winkeländerungen der Kardangelenkverbindung zu vergrößern, ist das Rohrende des Rohres 1c in Form einer sich verjüngenden Gabel ausgebildet. Die beiden Gabelzinken weisen wiederum Kreisöffnungen 4c auf, in denen unter Zwischenschaltung von nicht dargestellten Lagern    zwei Zapfenenden des Zapfenkreuzes 6c gehalten sind , z.B. mit einer Befestigungsschraube entsprechend Figur 1. Die beiden anderen durch die Gabel hindurchragenden Zapfenenden sind unter Zwischenschaltung von    Lagern 10c in dem die Gabelenden umgreifenden Rohr 2c gelagert und mit einem in den Umfang des Rohres verlaufenden Sicherungsring 11c gesichert. Das Rohr 1c kann hier um die Gabelachse wesentlich weiter verschwenkt werden als die entsprechenden Rohre gemäß den obigen Ausführungsbeispielen.

**0094468**

Messerschmitt-Bölkow-Blohm
Gesellschaft
mit beschränkter Haftung
München

Ottobrunn, den 30.04.82

BT01 Hi/Cz - 9203 -

**Kardangelenkverbindung**

## P a t e n t a n s p r ü c h e

1. Kardangelenkverbindung zweier drehfest miteinander gekoppelter Teile aus Faserverbundmaterial, die in zwei
   weiteren Freiheitsgraden zueinander beweglich sind, mit
   einem Zapfenkreuz,dessen Zapfenenden paarweise in jeweils mit den gekoppelten Teilen verbundenen Lagern
   gelagert sind, dadurch g e k e n n z e i c h n e t ,
   daß die miteinander über das Zapfenkreuz (6) gekoppelten
   Teile aus Faserverbundmaterial ineinandergreifende Rohre
   (1, 2) bzw. Rohrendstücke sind, in die unter Zwischenschaltung der Lager (7, 10) die Enden des Zapfenkreuzes
   (6) eingesetzt sind.

-2-

2. Kardangelenkverbindung nach Anspruch 1, dadurch
   g e k e n n z e i c h n e t  , daß in das Rohr bzw. Rohrendstück (1) mit dem kleineren Durchmesser das Zapfenkreuz mit zwei Enden in zwei gegenüberliegenden Kreisöffnungen (4) unter Zwischenschaltung von Lagern (7)
   gehalten ist, während die beiden anderen Enden des
   Zapfenkreuzes durch Längsschlitze (3) dieses Rohres
   hindurchgreifen und in entsprechende Öffnungen (9) unter
   Zwischenschaltung von    Lagern (10) des übergreifenden
   Rohres bzw. Rohrendstücks (2) gehalten sind.

3. Kardangelenkverbindung nach Anspruch 2, dadurch
   g e k e n n z e i c h n e t  , daß die in den Öffnungen
   (9) des übergreifenden Rohres bzw. Rohrendstückes (2)
   mit den    Lagern (10) gehaltenen Zapfenenden durch
   einen um den Umfang des Rohres bzw. Rohrendstückes (2)
   verlaufenden Sicherungsring (11) gehalten und gesichert
   sind.

4. Kardangelenkverbindung nach einem der vorhergehenden
   Ansprüche, dadurch g e k e n n z e i c h n e t  , daß
   das eine Rohrende (1c) als Gabel (12) ausgebildet ist,
   in deren Gabelenden zwei Zapfen des Zapfenkreuzes (6c)
   gelagert sind, und daß die beiden anderen Zapfenenden
   in dem zweiten, die Gabel (12) übergreifenden Rohr bzw.
   Rohrendstück (2c) gelagert sind.

FIG. 1

FIG. 2

FIG. 3

FIG. 4

FIG. 5

FIG. 6

72.a3

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | F 16 D 3/40 |
| Y | FR-A-2 389 038 (UNION CARBIDE) <br> * ganzes Dokument * | 1,2,4 | |
| | --- | | |
| Y | US-A-3 461 688 (GARFINKLE) <br> * ganzes Dokument * | 1,2,4 | |
| | --- | | |
| D,A | DE-A-2 032 778 (TORRINGTON CO.) | | |
| | ----- | | |

|  | RECHERCHIERTE SACHGEBIETE (Int. Cl. ³) |
|---|---|
| | F 16 D 3/00 <br> F 16 C 3/00 |

Der vorliegende Recherchenbericht wurde für alle Patentansprüche erstellt.

| Recherchenort | Abschlußdatum der Recherche | Prüfer |
|---|---|---|
| DEN HAAG | 07-01-1983 | BALDWIN D.R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82